Europäisches Patentamt

European Patent Office

Office européen des brevets

(19)

(11) Veröffentlichungsnummer: **0 268 169**
**A2**

(12) **EUROPÄISCHE PATENTANMELDUNG**

(21) Anmeldenummer: 87116467.9

(22) Anmeldetag: 07.11.87

(51) Int. Cl.4: **C09K 3/10** , C08L 53/02

(30) Priorität: 08.11.86 DE 3638224

(43) Veröffentlichungstag der Anmeldung:
25.05.88 Patentblatt 88/21

(84) Benannte Vertragsstaaten:
ES GR

(71) Anmelder: **Baden-Chemie GmbH**
**Schneidweg 2**
**D-7570 Baden-Baden 11(DE)** ·

(72) Erfinder: **Schubert, Uwe**
**Siebenmorgen 2-10**
**D-5300 Bonn 3(DE)**

(74) Vertreter: **von Kreisler, Alek, Dipl.-Chem. et al**
**Deichmannhaus am Hauptbahnhof**
**D-5000 Köln 1(DE)**

(54) **Elastische Dichtungsmasse.**

(57) Die Erfindung betrifft neuartige Dichtungsmassen und ein Verfahren zur Herstellung von Dichtungsmassen, die dadurch gekennzeichnet sind, daß sie 13 bis 19 Gew.-Teile Teleblock-Radial-polymeren Styrol-Butadienkautschuk, 9 bis 13 Gew.-Teile an weiterem Teleblock-Radialpolymerem Styrol-Butadienkautschuk mit einem gegenüber ersterem um wenigstens 20 Gew.-% erhöhten Butadienanteil, 15 bis 25 Gew.-Teile copolymeren alpha-Methylstyrols, 16 bis 31 Gew.-Teile eines Lösungsmittelgemisches, 8 bis 14 Gew.-Teile eines Kohlenwasserstoff-Solvent-Gemisches, 5 bis 12 Gew.-Teile Polypropylenglykolalkylphenylether, 0 bis 15 Gew.-Teile pyrogene Kieselsäure und 0,1 bis 2 Gew.-Teile Antioxidationsmittel enthalten.

EP 0 268 169 A2

## Elastische Dichtungsmasse

Die vorliegende Erfindung betrifft elastische Dichtungsmassen mit einer neuartigen Bindemittelkombination.

Unter Dichtungsmassen, nach DIN 52 460 Dichtungsstoffen, werden im Sinne der vorliegenden Erfindung plastisch-oder elastischbleibende Massen zur Abdichtung undichter Stellen, sogenannter Fugen, verstanden.

Die Anwendung von Fugenmassen erstreckt sich auf ein weites Feld im Baubereich, wobei Dichtungsmassen im Hochbau als Dehnungsfugen im Innen-und Außenbereich, als Anschluß-und Bauteilfugen verwendet werden können. Im Glasbau und Sanitärbereich finden Dichtungsmassen Anwendung in Verglasungsfugen, Einbaufugen, Bewegungsfugen, Trennfugen sowie zum Einsetzen von sanitären Anlagen. In der Industrie können beispielsweise im Maschinenbau, Geräte-und Fahrzeugbau Dichtungsmassen ebenso verwendet werden wie zur Reparatur von Haushaltsgegenständen oder sonstigen Gebrauchsartikeln. Zur wasserhemmenden Abdichtung im Dachbereich bei Gebäuden werden elastische Dichtungsmassen verwendet.

Nach Ullmanns Encyklopädie der technischen Chemie, 4. Auflage, Band 14, Seite 261 werden Dichtungsmassen entweder nach dem Abbindemechanismus oder nach der Rohstoffbasis eingeteilt.

Die nachfolgende Aufzählung nennt die wichtigsten Dichtungsmassen, eingeteilt nach der Rohstoffbasis:
-Polysulfid-Dichtungsmassen,
-Polysiloxane (Silikon-Dichtungsmassen),
-Polyurethan-Dichtungsmassen,
-Polyacrylat-Dichtungsmassen,
-Butylkautschuk-Polyisobutylen-Dichtungsmassen,
-PVC-Dichtungsmassen,
-oxidativ trocknende Dichtungsmassen und
-sonstige Dichtungsmassen.

Einige Dichtungsmassen, wie beispielsweise Polysulfid-oder Polyurethan-Dichtungsmassen sind als Zweikomponenten-Produkte im Handel, während die anderen als Einkomponenten-Produkte erhältlich sind. Einkomponentige Systeme, die neben dem Bindemittel zusätzliche Stoffe, wie z.B. Pigmente, Weichmacher, Kalksteinmehl, UV-Stabilisatoren und Antioxidantien enthalten, sind aufgrund der einfacheren Handhabung in der Regel zu bevorzugen. Für spezielle Anforderungen an die Dichtungsmasse, wie z.B. eine hohe Kraftaufnahme, eine hohe Chemikalienbeständigkeit, können auch technologisch aufwendigere Produkte eingesetzt werden, die gemäß dem Anwendungszweck konfektioniert sind.

Die wesentlichen technischen Anforderungen, die an eine Dichtungsmasse gestellt werden, sind beispielsweise in der DIN 18 540, Teil 1 und 2, beschrieben. Diese Norm bezieht sich neben den Produkteigenschaften auch auf die Konstruktion von Fugen, wie beispielsweise Stoß-, Überlappungs-und Winkelfugen. Dieser Umstand ist notwendig, da die oben aufgezählten Dichtungsmassen hinsichtlich ihrer Anwendung materialtechnische Grenzen aufweisen.

In der Praxis wird jedoch die Konstruktion der Fuge meist nicht beachtet, so daß es häufig zu Schäden durch unsachgemäße Verwendung von ungeeigneten Dichtungsmassen kommt.

Die anwendungstechnischen Grenzen der einzelnen Dichtungsmasse liegen zum einen in dem elastischen Dauerdehnungsverhalten und der dazu gehörenden Chemikalienbeständigkeit.

Dichtungsmassen, die Bindemittel enthalten, die hinsichtlich ihrer Elastizität, Bruchdehnung und Chemikalienbeständigkeit geeignet wären, die oben genannten materialtechnischen Grenzen zu erweitern, ohne daß es zu einer Beeinträchtigung der abdichtenden Dauerfunktion kommt, sind in der Technik bekannt. Als Bindemittel dieser Dehnungsfugen wird Naturkautschuk respektive Synthesekautschuk verwendet. Bislang ist jedoch kein Einkomponenten-Werkstoff als Fugenmasse bekannt, der vergleichbare Eigenschaften eines natürlichen Kautschuks aufweist.

Styrol-Butadien-Kautschuke sind bekannt. Es ist jedoch schwierig, derartige Styrol-Butadien-Kautschuke in eine verarbeitungsfähige Form zu bringen, die geeignet ist, diese als elastische Dichtungsmassen, insbesondere als Einkomponentenzusammensetzung, zu verwenden und gleichzeitig die gleichen Eigenschaften wie nach einer Vulkanisation zu erreichen.

Die typischen Eigenschaften von Styrol-Butadien-Kautschuk sind:
-Verträglichkeit mit Naturkautschuk
-hohe Abreibfestigkeit
-hohe Hitzebeständigkeit
-hohe Elastizität.

Je nach Verhältnis von Butadien und Styrol entstehen klar definierte Eigenschaften des späteren Produkts. Besonders problematisch ist es, dieses Festprodukt in eine flüssige oder pastöse Form zu überführen, die vergleichbare Eigenschaften wie beispielsweise Vinylchlorid/Vinylpropionat/Acrylweichharze aufweisen.

Der vorliegenden Erfindung liegt die Aufgabe zugrunde, einen Synthesekautschuk, in diesem Fall einen Styrol-Butadien-Kautschuk, derart zu konfektionieren, daß er als einkomponentige Dichtungsmasse handhabbar ist und in seiner Gebrauchsfunktion diejenigen Eigenschaften besitzt, wie sie von natürlichem Kautschuk schlechthin bekannt sind. Die Anforderungen, die an einen derartigen Kautschuk gestellt werden, sind eine außerordentlich hohe Verformungsmöglichkeit mit einem 100 %igen Rückstellvermögen.

Bei der Verwendung von bekannten Dichtungsmassen im Hochbau führte die Nichteinhaltung der konstruktiven Voraussetzungen der DIN 18 540 zur "Dreiflankenhaftung". Durch diese Dreiflankenhaftung kommt es dann zur Rißbildung in der Dichtungsmasse selbst, oder zur Ablösung von den Fugenflanken, so daß die Funktionstüchtigkeit der Dichtungsmasse nicht mehr gegeben ist. Zurückzuführen ist dies bei bekannten Dichtungsmassen auf die limitierte Bruchdehnung, die, je nach eingestellter Shore-Härte, bei maximal 500 liegen kann. Bei natürlichem Kautschuk ist bekannt, daß die weicher Einstellung eine Bruchdehnung von weit mehr als 1000 % erreicht werden kann.

Dichtungsmassen mit lediglich plastischen Eigenschaften besitzen keine hohe Kraftaufnahme, die zudem bei weiterer Drehung wieder abgebaut wird, d.h. der Werkstoff beginnt zu fließen. Zudem besitzen plastische Werkstoffe keine Rückstellung, d.h. sie kehren nach der Dehnung nach mehr in den Ausgangszustand zurück. Im Gegensatz dazu besitzen elastische Werkstoffe ein 100 %iges Rückstellvermögen. Die Kraftaufnahme steigt mit zunehmender Dehnung. Derartige elastische Dichtungsmassen sind insbesondere geeignet, unterschiedliche Ausdehnungen aufzunehmen, wie sie bei dem Aufeinandertreffen von verschiedenen Materialien in den Kanten der Fuge durch beispielsweise unterschiedliche Wärmeausdehnungen und Wärmeausdehnungskoeffizienten vorkommen.

Eine weitere Aufgabe, die der Erfindung zugrunde liegt, ist, trotz einer weichen Einstellung eine solche Oberflächenhärte zu erzielen, daß die Oberfläche geeignet ist, einer normalen Verkehrslast im Kraftfahr-oder Fußgängerbereich zu widerstehen.

Gegenstand der vorliegenden Erfindung ist somit eine elastische Dichtungsmasse, die dadurch gekennzeichnet ist, daß sie

(a) 13 bis 19 und vorzugsweise 16 bis 18 Gew.-Teile Teleblock-Radial-polymeren Styrol-Butadienkautschuk,

(b) 9 bis 13 und vorzugsweise 10 bis 12 Gew.-Teile an weiterem Teleblock-Radial-polymerem Styrol-Butadienkautschuk mit einem gegenüber (a) um wenigstens 20 Gew.-% erhöhten Butadienanteil,

(c) 15 bis 25 und vorzugsweise 18 bis 22 Gew.-Teile copolymeren alpha-Methylstyrols,

(d) 16 bis 31 und vorzugsweise 21 bis 27 Gew.-Teile eines Lösungsmittelgemisches,

(e) 8 bis 14 und vorzugsweise 11 bis 13 Gew.-Teile eines Kohlenwasserstoff-Solvent-Gemisches mit ≤ 3 % aromatisch gebundenem Kohlenstoff,

(f) 5 bis 12 und vorzugsweise 8 bis 10 Gew.-Teile Polypropylenglykolalkylphenylether,

(g) 0 bis 15 und vorzugsweise 8 bis 12 Gew.-Teile pyrogene Kieselsäure und

(h) 0,1 bis 2 und vorzugsweise 0,8 bis 1,5 Gew.-Teile Antioxidationsmittel enthält.

Ein weiteres Merkmal der vorliegenden Erfindung besteht darin, daß die Dichtungsmasse

9 bis 14 und vorzugsweise 11 bis 13 Gew.-Teil Butylacetat,

1 bis 5 und vorzugsweise 2 bis 4 Gew-Teile Hexylacetat,

3 bis 6 und vorzugsweise 4 bis 5 Gew.-Teile Methylethylketon und

3 bis 6 und vorzugsweise 4 bis 5 Gew.-Teile Toluol als Lösungsmittelgemisch enthält.

Gemäß einer Ausführungsform wird als Antioxidationsmittel in den erfindungsgemäßen Dichtungsmassen 2,2'-Methylen-bis-(4-methyl-6-tert.-butylphenol) verwendet.

Als Kohlenwasserstoff-Solvent-Gemisch wird vorzugsweise ein paraffinbasisches Solventraffinat verwendet, das 34 % napthenisch gebundenen Kohlenstoff, 3 % aromatisch gebundenen Kohlenstoff und 43 % paraffinisch gebundenen Kohlenstoff enthält, wobei die Viskosität, gemessen bei 40°C, in einem Ubelhode-Viskosimeter 19 m²/sec beträgt.

Als copolymeres alpha-Methylstyrol wird vorzugsweise ein Methylstyrol mit einem Erweichungspunkt unterhalb von 85°C und der Farbzahl 1 verwendet. Alpha-Methylstyrol dient als Ausschwimmadditiv, zu dessen Aufnhame der Polypropylenglykolalkylphenylether zugesetz wird. Die Ausschwimmkombination besteht aus der eigentlichen Bindemittelkombination, einem speziellen Festharz, welches innerhalb der Austrittphase an die Oberfläche der Dichtungsmasse ausschwimmen und dort einen festen und harten Oberflächenfilm bilden kann, der mindestens 50 % der Fugentiefe ausmacht und somit eine harte Schicht bildet, ohne daß die Elastizität verlorengeht. Die Ausschwimmkombination ist so gewählt, daß sie die Kraftaufnahme zur Dehnung vergrößert, ohne die Bruchdehnung auf Werte unterhalt von 1000 % zu verringern.

Pyrogene Kieselsäure kann den erfindungsgemäßen Dichtungsmassen zur Erreichung der Standfestigkeit bei vertikaler Arbeitsweise zugesetzt werden.

Den erfindungsgamäßen Dichtungsmassen können die verschiedensten natürlichen oder synthetischen, anorganischen oder organischen Pigmente zugesetz werden. Bevorzugt enthalten erfindungsgemäße Dichtungsmassen 0 bis 3 Gew.-% eines oder Gemische von Pigmenten.

Als Pigmente können beispielsweise bekannte Vulkanisationspigmente wie Magnesiumoxid, Calciumoxid oder Zinkoxid zugesetzt werden. Titandioxid ist beispielsweise als Weißpigment geeignet. Des weiteren können bekannte Inertpigmente, wie beispielsweise Eisenoxide oder Phthalocyanine verwendet werden.

Die erfindungsgemäßen elastischen Dichtungsmassen werden hergestellt, indem das copolymere alpha-Methylstyrol in dem Polypropylenglykolalkylphenylether bei 85°C aufgeschmolzen wird. Dieser Vorgang wird durch Rühren mittels eines Planetenrührers unterstützt. Während dieses Prozesses wird das paraffinbasische Solvent-Raffinat im Verlauf einer Stunde hinzugegeben und die Reaktionsmischung auf 95°C erwärmt. Nach der Einstellung eines völligen Phasengleichgewichtes wird die Reaktionsmischung auf Raumtemperatur abgekühlt und mit der in einem zweiten Reaktionskessel angesetzten Styrol-Butadienlösung, in der auch das Antioxidationsmittel, die pyrogene Kieselsäure und gegebenenfalls das Pigment enthalten ist, vermischt. Der Mischvorgang erfolgt auch hier durch einen Planetenrührer mit hoher Umdrehungsgeschwindigkeit.

Zur vollständigen Durchmischung wird der Reaktionskessel auf 60 bis 80 °C aufgeheizt und im Vakuum Methylethylketon abgezogen. Durch die Menge des abgezogenen Lösungsmittels kann die Viskosität der im Kessel befindlichen Mischung derart eingestellt werden, daß nach der Abfüllung dieses Gemisches ein anwendungstechnisch fertiges Produkt vorliegt.

Die so erhaltene einkomponentige Dichtungsmasse erhärtet nach der Anwendung durch das zeitlich verzö gerte Abdunsten der restlichen Lösemittelbestandteile wie Butylacetat und Hexylacetat. Dadurch werden Eigenschaften des Endproduktes erreicht, wie sie von bekannten Dichtungsmassen nachweislich nicht erreicht werden können.

Die Vorteile der erfindungsgemäßen Dichtungsmassen bestehen in einer Dehnbarkeit von mehr als 1000 % und einer vollen Elastizität, d.h., erfindungsgemäße Dichtungsmassen weisen ein 100 %iges Rückstellvermögen auf.

Ein weiterer Vorteil der erfindungsgemäßen Dichtungsmassen besteht insbesondere darin, daß diese auch auf feuchten Untergründen ohne Primer anwendbar sind. Eine hervorragende Haftung auf metallischen und mineralischen Untergründen, sowie eine hohe Beständigkeit gegen Säuren und Laugen zeichnen die erfindungsgemäßen Dichtungsmassen aus. Die Shore-Härte A beträgt etwa 45. Somit sind die Dichtungsmassen für Straßen- und Fußgängerbereiche ebenso geeignet, wie für Dehnungsfugen, selbst bei Dreiflankenhaftung.

Da die erfindungsgemäßen Dichtungsmassen auch mit bekannten Dichtungsmassen, die als Bindemittel Silikon, Bitumen, Acryl-Styrolcopolymere, Vinylchlorid, Epoxidharz und Polyurethan enthalten, verträglich sind, können diese zur Reparatur von mit den oben genannten Bindemitteln versehenen Dichtungsmassen gleichzeitig verwendet werden.

Das nachfolgende Ausführungsbeispiel enthält Verfahrensvorschrift zur Herstellung der erfindungsgemäßen Dichtungsmassen.

Beispiel

22 Gew.-Teile copolymeres alpha-Methylstyrol mit einem Erweichungspunkt von 85°C und der Farbzahl 1 werden in 10 Teilen Polypropylenglykolalkylphenylether bei 85°C aufgeschmolzen. Dieser Vorgang wird durch Rühren mittels eines Planetenrührers unterstützt. Während des Schmelzprozesses werden 13 Gew.-Teile eines paraffinbasischen Solvent-Raffinats, wie oben spezifiziert, im Verlauf einer Stunde zugegeben, wobei die Temperatur auf 95°C erhöht wird.

Nach der Feststellung der völligen Phasenkonformität wird diese, zwischenzeitlich auf Raumtemperatur abgekühlte Masse mit der in einem zweiten Kessel angesetzten Lösung von 18 Gew.-Teilen eines Teleblock-Radial-polymeren Styrol-Butadienkautschuks und 12 Gew.-Teilen eines Teleblock-Radial-polymeren Styrol-Butadienkautschuks mit einen gegenüber dem erstgenannten um 20 Gew.-% erhöhten Butadienanteil, die gleichzeitig auch 1 Gew.-Teil 2, 2'-Methylen-bis-(4-methyl-6-tert.-butylphenol) und 10 Gew.-Teile pyrogene Kieselsäure enthält, vermischt. Der Mischvorgang erfolgt auch hier durch einen Planetenrührer mit hoher Umdrehungsgeschwindigkeit.

In dieser Phase wird der Kessel wieder auf 65°C aufgeheizt und bis auf einen Druck von 8666 Pa (65 mmHg) evakuiert. Methylethylketon wird im Vakuum abgezogen und über einen Kondensatabscheider für spätere Mischungen wieder rückgewonnen. Das Abziehen dieses Lösungsmittels hat zur Folge, daß die Viskosität der im Kessel befindlichen Mischung auf eine solche ansteigt, daß nach Abfüllung dieses Gemisches ein anwendungstechnisch fertiges Produkt vorliegt.

**Ansprüche**

1. Elastische Dichtungsmasse, dadurch gekennzeichnet, daß sie

(a) 13 bis 19 Gew.-Teile Teleblock-Radial-polymeren Styrol-Butadienkautschuk,

(b) 9 bis 13 Gew.-Teile an weiterem Teleblock-Radial-polymerem Styrol-Butadienkautschuk mit einem gegenüber (a) um wenigstens 20 Gew.-% erhöhten Butadienanteil,

(c) 15 bis 25 Gew.-Teile copolymeren alpha-Methylstyrols,

(d) 16 bis 31 Gew.-Teile eines Lösungsmittelgemisches,

(e) 8 bis 14 Gew.-Teile eines Kohlenwasserstoff-Solvent-Gemisches mit wenigstens 3 % aromatisch gebundenem Kohlenstoff,

(f) 5 bis 12 Gew.-Teile Polypropylenglykolalkylphenylether,

(g) 0 bis 15 Gew.-teile pyrogene Kieselsäure und

(h) 0,1 bis 2 Gew.-Teile Antioxidationsmittel enthält.

2. Elastische Dichtungsmasse nach Anspruch 1, dadurch gekennzeichnet, daß sie

(a) 16 bis 18 Gew.-Teile Teleblock-Radial-polymeren Styrol-Butadienkautschuk,

(b) 10 bis 12 Gew.-Teile an weiterem Teleblock-Radial-polymerem Styrol-Butadienkautschuk mit einem gegenüber (a) um wenigstens 20 Gew.-% erhöhten Butadienanteil,

(c) 18 bis 22 Gew.-Teile copolymeren alpha-Methylstylrols,

(d) 21 bis 27 Gew.-Teile eines Lösungsmittelgemisches,

(e) 11 bis 13 Gew.-Teile eines Kohlenwasserstoff-Solvent-Gemisches mit wenigstens 3 % aromatisch gebundenem Kohlenstoff,

(f) 8 bis 10 Gew.-Teile Polypropylenglykolalkylphenyether,

(g) 8 bis 12 Gew.-Teile pyrogene Kieselsäure und

(h) 0,8 bis 1,5 Gew.-Teile Antioxidationsmittel enthält.

3. Elastische Dichtungsmasse nach Anspruch 1 oder 2, dadurch gekennzeichnet, daß sie

(a) 9 bis 14 und vorzugsweise 11 bis 13 Gew.-Teile Butylacetat,

(b) 1 bis 5 und vorzugsweise 2 bis 4 Gew.-Teile Hexylacetat,

(c) 3 bis 6 und vorzugsweise 4 bis 5 Gew.-Teile Methylethylketon und

(d) 3 bis 6 und vorzugsweise 4 bis 5 Gew.-Teile Toluol

als Lösungsmittelgemisch enthält.

4. Elastische Dichtungsmasse nach Ansprüchen 1 bis 3, dadurch gekennzeichnet, daß das Kohlenwasserstoff-Solvent-Gemisch ein paraffinbasisches Raffinat ist.

5. Elastische Dichtungsmasse nach Ansprüchen 1 bis 4, dadurch gekennzeichnet, daß das Antioxidationsmittel 2,2'-Methyl-bis-(4-methyl-6-tert.-butylphenyl) ist.

6. Elastische Dichtungsmasse nach Ansprüchen 1 bis 5, dadurch gekennzeichnet, daß sie 0 bis 3 Gew.-Teile an Pigment enthält.

7. Verfahren zur Herstellung einer Dichtungsmasse nach Ansprüchen 1 bis 6, dadurch gekennzeichnet, daß man alpha-Methylstyrol unter gleichzeitiger Zugabe eines Kohlenwasserstoff-Solvent-Gemisches in Polyproplyenglykolalkylphenylether aufschmilzt und nach Abkühlung auf Raumtemperatur mit einer Lösung der Styrol-Buta-dienkautschuke in dem Lösungsmittelgemisch, die zudem Antioxidationsmittel, pyrogene Kieselsäure und gegebenenfalls Pigmente enthält, bei einer Temperatur von 60 bis 80 °C vermischt, anschließend bei vermindertem Druck Methylethylketon abzieht, wobei die Viskosität der Dichtungsmasse durch die Menge an abgezogenem Methylethylketon eingestellt wird.